# EUROPÄISCHE PATENTSCHRIFT

(11) **EP 1 388 469 B1**
(45) Veröffentlichungstag und Bekanntmachung des Hinweises auf die Patenterteilung: **19.04.2006**
(21) Anmeldenummer: 03102430.0
(22) Anmeldetag: 05.08.2003
(51) Int. Cl.: B60R 25/00, E05B 65/12

(54) **Zugangskontrollsystem für Kraftfahrzeuge**
Access control system for vehicles
Système de contrôle d'accès pour véhicules

(30) Priorität: 08.08.2002 DE 10236305
(43) Veröffentlichungstag der Anmeldung: 11.02.2004
(73) Patentinhaber: Hella KGaA Hueck & Co., 59552 Lippstadt (DE)
(72) Erfinder: Dirkers, Helge, 59557, Lippstadt (DE); Schniedertüns, Volker, 33154, Salzkotten (DE); Reimann, Martin, 59071, Hamm (DE); Schneider, Klaus, 49393, Lohne (DE); Schütte, Guido, 59555, Lippstadt (DE); Figura, Christof, 59174, Kamen (DE); Schirrmann, Jörg, 33604, Bielefeld (DE); Bökenbrink, Maik, 33818, Leopoldshöhe (DE); Mehn, Michael, 59602, Rüthen (DE); Scharwald, Lothar, 59558, Lippstadt (DE)

(56) Entgegenhaltungen:
- EP-A- 0 523 602
- DE-A- 19 941 351
- DE-A- 19 960 260

## Beschreibung

Die Erfindung bezieht sich auf ein Zugangskontrollsystem für Kraftfahrzeuge mit einem oder mehr benutzerseitig mitführbaren ID-Gebern (Identifikationsgeber auch Funkschlüssel genannt), wobei zur Durchführung einer drahtlosen Authentifikationskommunikation mit den ID-Gebern fahrzeugseitig mindestens eine Sende-/Empfangseinheit für den Fahrzeugaußenraum und mindestens eine Sende-/Empfangseinheit für den Fahrzeuginnenraum vorgesehen ist. Bei erfolgreicher Authentifikation eines ID-Gebers wird eine oder mehrere Sicherheitseinrichtungen, zum Beispiel ein Türschloß, ent-/oder verriegelt. Bei einen gattungsgemäßen Zugangskontrollsystem, das auch als Passive Entry System bezeichnet wird, ist für das Auslösen der Authentifikationskommunikation nicht mehr das Drücken einer Taste an dem ID-Geber (Funkschlüssel) notwendig, vielmehr wird die Authentifikationskommunikation automatisch über einen fahrzeugseitigen Auslöseschalter aktiviert, der zum Beispiel in den Türgriffen integriert ist Bei einer Betätigung eines Türgriffs zum Zwecke des Türöffnens wird dann automatisch auch der Auslöseschalter betätigt. Der Auslöseschalter kann z.B. als kapazitiver Näherungsschalter oder als mechanischer Kontaktschalter ausgebildet sein. Bei einer Betätigung dieses Auslöseschalters wird über eine fahrzeugseitige Steuereinheit mindestens eine fahrzeugseitige Sendeeinheit für den Fahizeugaußenraum zur Aussendung eines Authentifikations-Startsignals angesteuert. Dabei ist jeder Fahrzeugseite (Fahrerseite, Beifahrerseite, Heckseite) ein Auslöseschalter, vorzugsweise im Türgriff, zugeordnet. Daneben weist jede Fahrzeugseite mindestens eine Sendeeinheit (LF-Antenne, Low Frequency Antenne) für den Fahrzeugaußenraum auf. Ebenso sind für den Fahrzeuginnenraum mehrere Sendeeinheiten (LF-Antenne) vorgesehen, die möglichst den gesamten Fahrzeuginnenraum abdecken sollen. Die LF-Antennen dienen zum Starten der Authentifikationskommunikation, indem sie mit ihrem LF-Signal die ID-Geber aufwecken. Für den weiteren Teil der Authentifikationskommunikation, welcher in einem sogenannten Challenge-Response-Dialog besteht, weist das Fahrzeug eine UHF-Sende-/Empfangseinheit auf, deren Sende-/Empfangsbereich sich sowohl auf den Fahrzeugaußenraum als auch auf den Fahrzeuginnenraum erstreckt. Die ID-Geber weisen dementsprechend eine LF-Empfängereinheit und eine UHF-Sende-/Empfangseinheit auf.

Ein Problem besteht nun darin, daß die fahrzeugseitigen LF-Antennen für den Fahrzeugaußenraum zumindest teilweise auch in den Fahrzeuginnenraum hineinstrahlen. Dies kann, wenn ein ID-Geber sich im Fahrzeuginnenraum befindet, zu einem Sicherheitsrisiko führen, das weiter unten näher erläutert werden soll.

Ein System gemäß dem Oberbegriff von Anspruch 1 ist aus DE 199 60 260 A1 bekannt.

Die Problematik des im Fahrzeuginnenraum "verlorenen" ID-Gebers wird bereits in den Druckschriften DE 4123654A1 und DE 19711901C1 angesprochen. Allerdings geht es bei diesen Druckschriften darum, entweder ein Verriegeln des Fahrzeugs zu verhindern (= DE 4123654A1), wenn sich noch ein ID-Geber im Fahrzeug befindet, oder darum, einen im Fahrzeuginnenraum "verlorenen" ID-Geber nach dem Verriegeln des Fahrzeugs zu sperren bis das Fahrzeug mit einem anderen berechtigten ID-Geber wieder entriegelt wird. (= DE 19711901C1). Die Problematik des im Fahrzeuginnenraum "verlorenen" ID-Gebers ist insbesondere dann gegeben, wenn zwei oder mehr ID-Geber zum System gehören, was regelmäßig so ist.

Im ersten Fall, wo das Verriegeln des Fahrzeugs verhindert wird, wenn sich noch ein ID-Geber im Fahrzeuginnenraum befindet, wird davon ausgegangen, daß der Benutzer das Nichtverriegeln bemerkt und so sicher auf den noch im Fahrzeuginnenraum befindlichen ID-Geber aufmerksam gemacht wird, so daß er den ID-Geber aus dem Fahrzeuginnenraum entfernen wird. Auf diese Weise wird ein möglicher Missbrauch eines im Fahrzeuginnenraum "verlorenen" ID-Gebers durch Unbefugte verhindert.

Im zweiten Fall wird der Missbrauch eines im Fahrzeuginnenraum "verlorenen" ID-Gebers dadurch verhindert, daß dieser nach dem Verriegeln des Fahrzeugs automatisch gesperrt wird.

Eine bisher nicht beachtete Sicherheitslücke soll anhand zweier Szenarios beschrieben werden.

### 1. Szenario:

Es wird angenommen, daß ein Fahrzeug, in dem sich beispielsweise in der Seitentasche der Beifahrertür ein "verlorenet" ID-Geber befindet, mit einem anderen ID-Geber außerhalb des Fahrzeugaußenraums ordnungsgemäß entriegelt wird, beispielsweise infolge einer Betätigung des Fahrertürgriffs. In diesem Fall würde gemäß DE 19711901C1 der "verlorene" ID-Geber wieder entsperrt. Nun ist es bei vielen Passive Entry Zugangskontrollsystemen so, daß nur die Tür entriegelt wird, deren Auslöseschalter betätigt wurde (= selektives Türöffnen). In diesem Fall wäre die Beifahrertür auch nach dem Öffnen der Fahrertür noch verriegelt, um eigentlich ein unbefugtes Öffnen der Beifahrertür zu verhindern. Das Sicherheitsrisiko besteht nun darin, daß der nach dem Entriegeln der Fahrertür wieder freigegebene ID-Geber in der Seitentasche der Beifahrertür bei einer Betätigung des Beifahrertürgriffs durch einen Unbefugten aufgeweckt wird, da sich die Reichweite der fahrzeugseitigen LF-Antenne für den Außenraum der Beifahrerseite, welche nach Betätigung des Auslöseschalters im Türgriff ein Aufwecksignal an die ID-Geber sendet, auch in den Fahrzeuginnenraum bis zum ID-Geber in der Beifahrerseitentasche erstreckt. Wenn nun die nachfolgende Authentifikationskommunikation mit diesem ID-Geber ungehindert abläuft, führt dies zur Entriegelung der Beifahrertür. Dies hätte zur Folge, daß ein Unbefugter sich jederzeit trotz ursprünglich verriegelter Beifahrertür Zugang zum Fahrzeug verschaffen könnte.

### 2. Szenario:

Es wird angenommen, daß ein Fahrzeug mit einem ID-Geber außerhalb des Fahrzeugaußenraums ordnungsgemäß entriegelt wird, beispielsweise infolge einer Betätigung des Fahrertürgriffs. Anschließend betätigt der Fahrer den Verriegelungsknopf im Fahrzeuginnenraum, woraufhin die Fahrertür wieder verriegelt wird. Diese Verriegelung von innen ist keine Verriegelung im Sinne des Zugangskontrollsystems gemäß DE 19711901C1, so daß kein ID-Geber im Fahrzeuginnenraum gesperrt wird. Eine Verriegelung im Sinne des Zugangskontrollsystems gemäß DE 19711901C1, die zum Sperren eines im Fahrzeuginnenraum befindlichen ID-Gebers führt, ist lediglich eine Verriegelung von Außen. Eine Verriegelung von Außen, die als solche von einem Passive Entry/Keyless Go Zugangskontrollsystem erkannt wird, ist eine bei der vom Benutzer ein Auslöseschalter zum Zwecke der Verriegelung betätigt wird. Hierfür existiert neben dem Auslöseschalter (auch Auslösesensor genannt) für die Entriegelung auch noch ein Auslöseschalter für die Verriegelung, der ebenfalls eine Authentifikationskommunikation mit dem/den ID-Gebern auslöst. Da der ID-Geber in diesem Fall bei einer Verriegelung von innen nicht gesperrt wird, kann ein Unbefugter sich - wie im 1. Szenario beschrieben - Zugang zum Fahrzeug verschaffen, indem er lediglich einen Türgriff auf der Fahrerseite betätigt, da sich die Reichweite der fahrzeugseitigen LF-Antenne für den Außenraum der Fahrerseite ebenfalls bis in den Fahrzeuginnenraum hinein erstreckt.

Aufgabe der Erfindung ist es, ein Zugangskontrollsystem zu schaffen, bei dem die vorstehend beschriebene Sicherheitslücke geschlossen wird.
Diese Aufgabe wird erfindungsgemäß dadurch gelöst, daß nach einer Betätigung eines Auslöseschalters zum Zwecke der Entriegelung über die fahrzeugseitige Steuereinheit mindestens eine fahrzeugseitige Sendeeinheit für den Fahrzeuginnenraum zur Aussendung eines Passivierungssignals an einen im Fahrzeuginnenraum befindlichen ID-Geber angesteuert wird, wobei durch dieses Passivierungssignal eine weitere Teilnahme eines im Fahrzeuginnenraum befindlichen ID-Gebers an der Authentifikationskommunikation verhindert wird.

Mit anderen Worten wird bei jedem Zugangsversuch, der durch die Betätigung eines Auslöseschalters im Türgriff erkannt wird, über die LF-Antenne(n) im Fahrzeuginnenraum eine Passivierung des/der im Fahrzeuginnenraum befindlichen ID-Geber bewirkt. Dabei bedeutet Passivierung nicht eine vollständige Deaktivierung, sondern lediglich die Nichtteilnahme an der Authentifikationskommunikation, die auf das Aufwecksignal folgt. Da auf diese Weise verhindert wird, daß ein zwar unerwünscht aufgeweckter ID-Geber an der eigentlichen Authentifikationskommunikation teilnimmt, kann die Anwesenheit eines solchen ID-Gebers jedoch nicht eine Entriegelung durch Unbefugte auslösen.

Im Unterschied zu den fahrzeugseitigen LF-Antennen für den Fahrzeugaußenraum ist die Reichweite der LF-Antennen für den Fahrzeuginnenraum auch tatsächlich auf den Fahrzeuginnenraum beschränkt, so daß eine unerwünschte Passivierung von ID-Gebern im Fahrzeugaußenraum nicht erfolgt

Falls das Fahrzeug zwei oder mehr Sendeeinheiten für den Fahrzeuginnenraum aufweist, deren Sendebereiche jeweils zumindest teilweise unterschiedliche Bereiche des Fahrzeuginnenraums abdecken, so ist es vorgesehen, daß diese Sendeeinheiten zeitlich nacheinander jeweils ein Passivierungssignal absenden, um sicherzustellen, daß ein ID-Geber unabhängig davon, wo im Fahrzeuginnenraum er sich befindet, ein Passivierungssignal erhält

Anhand der beigefügten Zeichnungen soll die Erfindung veranschaulicht werden. Es zeigt:
- Figur 1: eine Draufsicht auf ein Fahrzeug mit den Reichweiten der Sendeeinheiten für den Fahrzeugaußenraum,
- Figur 2: ein Blockschaltbild des erfindungsgemäßen Zugangskontrollsystems,

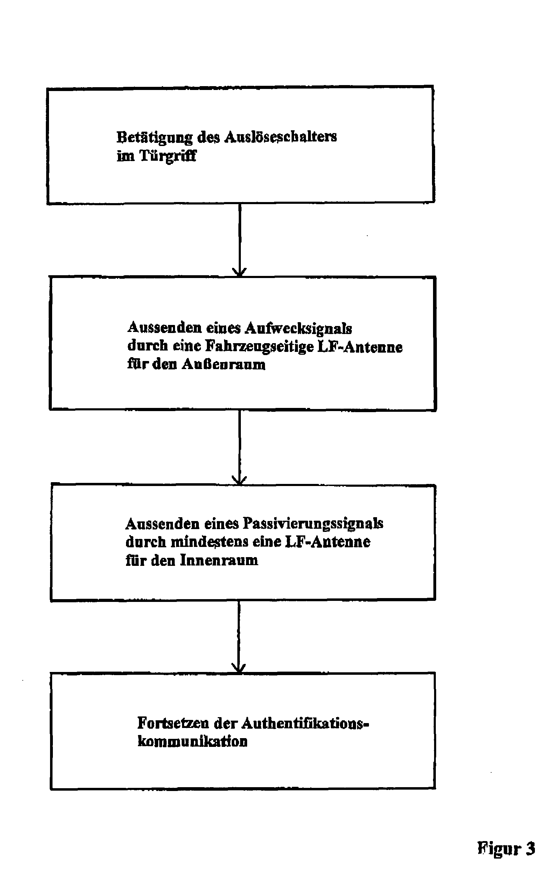

- Figur 3: den Verfahrensablauf nach der Betätigung eines Auslöseschalters zum Zwecke der Entriegelung.

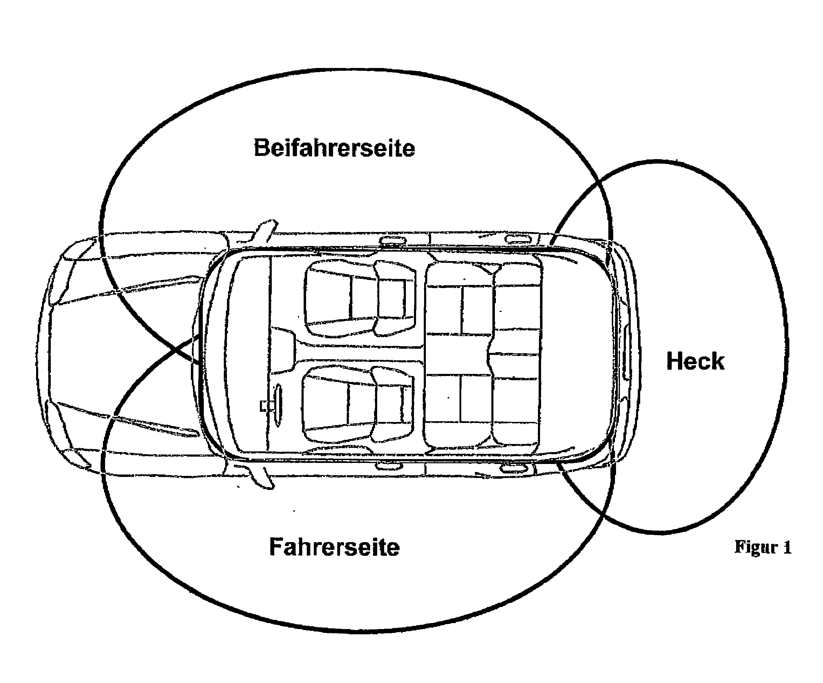

In Figur 1 ist die Draufsicht auf ein Fahrzeug dargestellt, wobei die Sendebereiche der Sendeeinheiten (3) für den Fahrzeugaußenraum miteingezeichnet sind. Wie zu erkennen ist, erstrecken diese sich auch in den Fahrzeuginnenraum hinein.

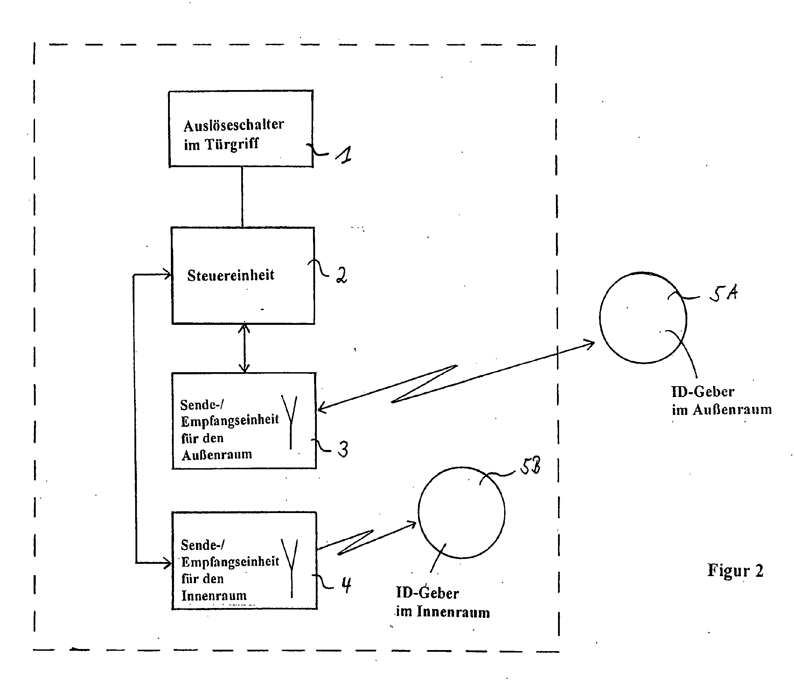

Figur 2 zeigt die zum Verständnis wesentlichen Komponenten des Zugangskontrollsystems:

### Auslöseschalter (1) im Türgriff:

Dieser wird bei Betätigung des Türgriffs automatisch mitbetätigt. Ein derartiger Auslöseschalter (1) befindet sich in jedem Türgriff (Fahrertür, Beifahrertür, Heckklappe).

### Steuereinheit(2):

Sie ist über entsprechende Leitungen mit den Auslöseschaltern (1) den Sende-/Empfangseinheiten (3,4) für den Außenraum und den Innenraum verbunden.

### Sende-/Empfangseinheit (3) für den Außenraum:

Diese Komponente steht stellvertretend für die verschiedenen LF-Sendeantennen, die der Fahrerseite, der Beifahrerseite und dem Heckbereich zugeordnet sind, wobei deren Reichweite sich teilweise auch auf den Fahrzeuginnenraum erstreckt. Darüber hinaus steht diese Komponente auch stellvertretend für eine UHF-Sende-/Empfangseinheit, deren Reichweite sich sowohl in den Fahrzeugaußenraum als auch in den Fahrzeuginnenraum erstreckt.

### Sende-/Empfangseinheit (4) für den Innenraum:

Diese Komponente steht stellvertretend für die verschiedenen LF-Sendeantennen, deren Reichweite sich über verschiedene Bereiche des Fahrzeuginnenraums erstrecken. Darüber hinaus steht diese Komponente auch stellvertretend für eine UHF-Sende-/Empfangseinheit, deren Reichweite sich sowohl in den Fahrzeugaußenraum als auch in den Fahrzeuginnenraum erstreckt. Vorzugsweise wird für den Außenraum und den Innenraum nur eine UHF-Sende-/Empfangseinheit verwendet.

### ID-Geber (5A, 5B):

Dargestellt ist jeweils ein ID-Geber (5A, 5B) im Innenraum und einer im Außenraum.

Eine Betätigung eines Auslöseschalters (1) im Türgriff wird der Steuereinheit (2) mitgeteilt. Daraufhin steuert diese die dem Auslöseschalter (1) zugeordnete LF-Antenne für den Außenraum an, z.B. die LF-Antenne für die Beifahrerseite, um einen möglichen ID-Geber (5A) im Außenbereich der Beifahrerseite aufzuwecken. Da die LF-Antenne für den Außenraum jedoch auch teilweise in den Innenraum hineinstrahlt, wird in unbeabsichtigter Weise auch ein ID-Geber (5B), der zum Beispiel in der Seitentasche der Beifahrertür liegt, mit aufgeweckt. Um eine weitere Teilnahme dieses ID-Geber (5B) an der nachfolgenden Authentifikationskommunikation zu verhindern, steuert die Steuereinheit (2) erfindungsgemäß auch die LF-Antenne(n) für den Fahrzeuginnenraum an, um ein Passivierungssignal an den im Innenraum befindlichen ID-Geber (5B) zu senden.

## Patentansprüche

1. Zugangskontrollsystem für Kraftfahrzeuge mit
- mit zwei oder mehr benutzerseitig mitführbaren ID-Gebern (5A, 5B),
- mit mindestens einer fahrzeugseitigen Sende-/Empfangseinheit (3) für den Fahrzeugaußenraum und mit mindestens einer Sende-/Empfangseinheit (4) für den Fahrzeuginnenraum zur Durchführung einer drahtlosen Authentifikationskommunikation mit den ID-Gebern (5A, 5B), wobei bei erfolgreicher Authentifikation eines ID-Gebers (5A, 5B) eine oder mehrere Sicherheitseinrichtungen ent-/oder verriegelt werden,
- mit mindestens einem fahrzeugseitigen Auslöseschalter (1) für die Entriegelung, bei dessen Betätigung zum Zwecke der Entriegelung über eine fahrzeugseitige Steuereinheit (2) mindestens eine fahrzeugseitige Sende-/Empfangseinheit (3) für den Fahrzeugaußenraum zur Aussendung eines Authentifikations-Startsignals angesteuert wird,
- mit mindestens einem fahrzeugseitigen Auslöseschalter für die Verriegelung, bei dessen Betätigung zum Zwecke der Verriegelung über eine fahrzeugseitige Steuereinheit (2) mindestens eine fahrzeugseitige Sende-/Empfangseinheit (3) für den Fahrzeugaußenraum zur Aussendung eines Authentifikations-Startsignals angesteuert wird,
- wobei der Sende-/Empfangsbereich von mindestens einer Sende-/Empfangseinheit (3) für den Fahrzeugaußenraum auch zumindest teilweise in den Fahrzeuginnenraum hineinragt,
**dadurch gekennzeichnet, daß**
nach einer Betätigung des Auslöseschalters (1) für die Entriegelung über die fahrzeugseitige Steuereinheit (2) mindestens eine fahrzeugseitige Sendeeinheit (4) für den Fahrzeuginnenraum zur Aussendung eines Passivierungssignals an einen im Fahrzeuginnenraum befindlichen ID-Geber (5B) angesteuert wird, wobei durch dieses Passivierungssignal eine weitere Teilnahme des im Fahrzeuginnenraum befindlichen ID-Gebers (5B) an der Authentifikationskommunikation verhindert wird.

2. Zugangskontrollsystem nach Anspruch 1,
**dadurch gekennzeichnet, daß**
das Fahrzeug zwei oder mehr Sendeeinheiten (4) für den Fahrzeuginnenraum aufweist, deren Sendebereiche jeweils zumindest teilweise unterschiedliche Bereiche des Fahrzeuginnenraums abdecken,
diese Sendeeinheiten zeitlich nacheinander jeweils ein Passivierungssignal absenden.

## Claims

1. Access control system for vehicles, having
- two or more ID issuing units (5A, 5B) able to be carried by users,
- at least one transmitting/receiving unit (3) at the vehicle for the vehicle external space and at least one transmitting/receiving unit (4) for the vehicle internal space for carrying out a wireless authentication communication with the ID issuing units (5A, 5B), wherein on successful authentication of an ID issuing unit (5A, 5B), one or more security devices are unlocked or locked,
- at least one release switch (1) at the vehicle for the unlocking, on actuation of which, for the purpose of the unlocking, at least one transmitting/receiving unit (3) at the vehicle for the vehicle external space is controlled by means of a control unit (2) at the vehicle, in order to transmit an authentication start signal,
- at least one release switch at the vehicle for the locking, on actuation of which, for the purpose of the locking, at least one transmitting/receiving unit (3) at the vehicle for the vehicle external space is controlled by means of a control unit (2) at the vehicle, in order to transmit an authentication start signal,
- wherein the transmitting/receiving region of at least one transmitting/receiving unit (3) for the vehicle external space extends at least partially into the vehicle internal space,
**characterised in that** after actuation of the release switch (1) for the unlocking by means of the control unit (2) at the vehicle, at least one transmitting unit (4) at the vehicle for the vehicle internal space is controlled in order to transmit a passivation signal to an ID issuing unit (5B) situated in the vehicle internal space, wherein, by means of this passivation signal, further participation in the authentication communication of the ID issuing unit (5B) situated in the vehicle internal space is prevented.

2. Access control system according to claim 1, **characterised in that** the vehicle has one or more transmitting units (4) for the vehicle internal space, said transmitting units having transmitting regions each of which at least partially cover different regions of the vehicle internal space, and these transmitting units each transmit a passivation signal one after the other.

## Revendications

1. Système de contrôle d'accès pour des véhicules automobiles, comportant
- deux ou plusieurs émetteurs d'identification (5A, 5B), que l'utilisateur peut porter sur lui,
- au moins une unité d'émission et réception (3) du côté véhicule pour l'environnement extérieur du véhicule et au moins une unité d'émission et réception (4) pour l'habitacle du véhicule, destinées à mettre en oeuvre une communication d'authentification sans fil avec les émetteurs d'identification (5A, 5B), un ou plusieurs dispositifs de sécurité étant déverrouillés ou verrouillés en cas d'authentification d'un émetteur d'identification (5A, 5B),
- au moins un déclencheur (1) du côté véhicule pour le déverrouillage, dont l'actionnement en vue d'un déverrouillage active, par l'intermédiaire d'une unité de commande (2) du côté véhicule, au moins une unité d'émission et réception (3) du côté véhicule pour l'environnement extérieur du véhicule afin qu'elle émette un signal de départ d'authentification,
- au moins un déclencheur du côté véhicule pour le verrouillage, dont l'actionnement en vue d'un verrouillage active, par l'intermédiaire d'une unité de commande (2) du côté véhicule, au moins une unité d'émission et réception (3) du côté véhicule pour l'environnement extérieur du véhicule afin qu'elle émette un signal de départ d'authentification,
- la zone d'émission et réception d'au moins une unité d'émission et réception (3) pour l'environnement extérieur du véhicule couvrant au moins en partie aussi l'habitacle du véhicule,
**caractérisé en ce que**
à la suite d'un actionnement du déclencheur (1) en vue d'un déverrouillage, au moins une unité d'émission et réception (4) du côté véhicule pour l'habitacle du véhicule est activée, par l'intermédiaire de l'unité de commande (2) du côté véhicule, pour émettre un signal de passivation vers un émetteur d'identification (5B) qui se trouve à l'intérieur de l'habitacle du véhicule, ce signal de passivation empêchant l'émetteur d'identification (5B) situé à l'intérieur de l'habitacle du véhicule de participer également à la communication d'authentification.

2. Système de contrôle d'accès selon la revendication 1, **caractérisé en ce que**
le véhicule comporte deux ou plusieurs unités d'émission (4) pour l'habitacle du véhicule, dont les zones d'émission couvrent chacune au moins en partie différentes zones à l'intérieur de l'habitacle du véhicule,
lesdites unités d'émission émettent chacune l'une après l'autre un signal de passivation.
